# FASCICULE DE BREVET EUROPEEN

(11) **EP 1 916 431 B1**
(45) Date de publication et mention de la délivrance du brevet: **14.07.2010**
(21) Numéro de dépôt: 07119435.1
(22) Date de dépôt: 26.10.2007
(51) Int. Cl.: F16C 19/52, F16C 33/60, F16C 39/02

(54) **Agencement de palier d'un arbre tournant et turboréacteur équipé d'un tel agencement**
Lageranordnung einer Drehwelle und mit einer solchen Anordnung ausgestatteter Turboreaktor
Arrangement of a bearing of a rotating shaft and jet engine equipped with such an arrangement

(30) Priorité: 26.10.2006 FR 0654570
(43) Date de publication de la demande: 30.04.2008
(73) Titulaire: SNECMA, 75015 Paris (FR)
(72) Inventeur: Plona, Daniel Georges, 77870 Vulaines sur Seine (FR)
(74) Mandataire: David, Daniel

(56) Documents cités:
- EP-A- 1 191 191
- EP-A2- 1 013 896
- EP-A2- 1 199 441
- US-A- 5 791 789
- US-B1- 6 413 046

## Description

La présente invention se rapporte à un palier d'arbre tournant dans un turboréacteur. Elle vise aussi un turboréacteur équipé d'un tel agencement de palier.

Dans le turboréacteur, la soufflante est destinée à accélérer l'air entrant dans une veine externe d'écoulement des gaz et qui rejoint la veine normale d'écoulement des gaz occupée par les compresseurs, la chambre de combustion et, après cette dernière les turbines, afin d'augmenter le taux de dilution des gaz.

En cas de rupture d'une aube de la soufflante, un balourd important est produit sur l'arbre tournant, qui supporte la soufflante, et par suite des charges importantes sont transmises aux structures fixes environnantes, ce qui risque de les détériorer rapidement. Il est donc nécessaire de protéger ces structures environnantes à l'encontre des endommagements causés par une propagation d'efforts importants à partir de l'arbre tournant.

Il pourrait être envisagé de renforcer les structures environnantes pour éviter leur endommagement, mais cela aurait pour conséquence d'alourdir ces structures, ce qui va à l'encontre des objectifs courants des constructeurs.

De manière générale, l'arbre tournant est soutenu par un premier palier en aval de la soufflante, et par un deuxième palier en aval du premier palier. Le terme « aval » est considéré dans le sens de l'écoulement des gaz.

Il est connu d'utiliser un dispositif découpleur, généralement constitué d'un ou plusieurs éléments fusibles, apte(s) à céder rapidement pour éviter la transmission d'efforts importants de l'arbre tournant aux structures fixes lors d'un événement exceptionnel tel qu'une rupture d'aube de soufflante. Ces éléments fusibles font généralement partie d'un support du premier palier. Grâce au découplage, l'arbre tournant peut être maintenu en rotation autour de son axe, avec une certaine souplesse radiale. En d'autres termes, il continue de tourner autour de son axe d'inertie qui est décalé radialement par rapport à l'axe géométrique du moteur. Après l'arrêt moteur et le ralentissement du rotor, la vitesse de rotation se stabilise à une valeur plus faible qui correspond à la vitesse d'avancement de l'aéronef jusqu'à son retour au sol.

L'arbre tournant fait partie d'une ligne d'arbre basse pression. Généralement, le débattement axial de l'arbre tournant est limité par une butée axiale qui est située au niveau du premier palier.

On rencontre également des configurations dans lesquelles la butée axiale est située au niveau du deuxième palier. Cet agencement permet d'utiliser en tant que premier palier un palier à rouleaux, qui est bien adapté aux charges radiales subies en cas de rupture d'aube. En fonctionnement normal, la reprise des efforts axiaux au deuxième palier se fait alors avec un gain de masse intéressant. De plus, après découplage, la fonction de butée axiale est conservée au niveau du deuxième palier.

Mais un tel agencement, comportant un palier à rouleaux en tant que premier palier, présente certains inconvénients. En effet, après découplage au niveau du premier palier, la rotation de l'arbre tournant se poursuit de manière perturbée, ce qui conduit l'arbre à fléchir au niveau du deuxième palier. Le deuxième palier est alors soumis à un désalignement important qui doit être repris par les éléments roulants. Ce chargement parasite au niveau du deuxième palier est ensuite transmis aux structures fixes environnantes. Par suite ces structures fixes environnantes risquent d'être endommagées. En outre, il existe un risque de rupture de la cage du palier, ce qui conduit à la disparition de la fonction palier à cet endroit.

Le document US 6 491 497 décrit un agencement de deuxième palier, qui s'efforce de surmonter ces inconvénients. Cet agencement de deuxième palier comporte un élément rotulant qui comporte une face sphérique et qui est fixée au deuxième palier au moyen d'organes de retenue. Ces organes de retenue sont capables de résister aux charges d'un fonctionnement normal, mais ils se rompent lorsqu'ils sont soumis à un désalignement ou à un moment prédéterminé. Ces organes de retenue constituent des éléments fusibles secondaires, complémentaires des éléments fusibles primaires situés au niveau du support de premier palier. La rupture des organes de retenue autorise un léger déplacement angulaire entre l'arbre tournant et le support de deuxième palier. Un tel agencement de deuxième palier a pour effet bénéfique de limiter le couple transmis au support de palier par le deuxième palier. Cependant, l'effort radial transite principalement par l'élément rotulant. Il en résulte que l'effort nécessaire pour rompre les organes de retenue fusibles croît avec l'effort appliqué et dépend du coefficient de frottement, ce qui risque de conduire à une rupture non souhaitée du support de deuxième palier.

L'invention à pour but de proposer un agencement de deuxième palier alternatif à l'agencement de deuxième palier de l'art antérieur, qui soit apte à réaliser une fonction de découplage angulaire lorsqu'il est soumis à un désalignement ou à un moment dépassant une valeur prédéterminée.

L'agencement de palier d'un arbre tournant autour d'un axe est du type comportant des éléments roulants disposés entre une bague de roulement extérieure et une bague de roulement intérieure.

Selon un premier aspect de l'invention, ladite bague de roulement intérieure comporte une première demi-bague fixée à l'arbre tournant et une deuxième demi-bague, et l'agencement de palier comporte des moyens de maintien pour maintenir ensemble lesdites deux demi-bagues, lesdits moyens de maintien étant aptes à se rompre ou se déformer lorsque le palier est soumis à un désalignement ou un moment supérieur à une valeur prédéterminée, de manière à autoriser un déplacement axial de la deuxième demi-bague par rapport à la première demi-bague.

Selon un premier mode de réalisation, lesdits moyens de maintien comportent une couronne de liaison interposée entre les deux demi-bagues et les reliant entre elles de sorte qu'avant séparation la bague de roulement intérieure est d'un seul tenant, et en ce que ladite couronne de liaison est apte à se rompre par traction lorsque le palier est soumis à un désalignement supérieur à une valeur prédéterminée.

Selon une première variante du premier mode de réalisation, cette couronne de liaison est continue. Selon une deuxième variante du premier mode de réalisation cette couronne de liaison est discontinue.

Selon un deuxième mode de réalisation, lesdites deux demi-bagues sont distinctes l'une de l'autre, et lesdits moyens de maintien comportent une entretoise interposée entre la deuxième demi-bague et une bride de blocage axial, ladite bride de blocage axial étant fixé à l'arbre tournant.

De préférence, ladite entretoise se présente sous la forme d'une rondelle ayant des zones de faiblesse aptes à se rompre lorsque le palier est soumis à un désalignement ou un moment supérieur à une valeur prédéterminée.

Selon une première variante du deuxième mode de réalisation, l'entretoise comporte :
- un corps annulaire et sensiblement oblique,
- un premier rebord s'étendant radialement vers l'intérieur à partir dudit corps et destiné à l'appui de l'entretoise contre la deuxième demi-bague, et
- un deuxième rebord s'étendant radialement vers l'extérieur à partir dudit corps et destiné à l'appui de l'entretoise contre la bride de blocage axial, et ledit corps intermédiaire est percé de trous séparés par des zones de faiblesse.

Selon cette première variante du deuxième mode de réalisation, lesdites zones de faiblesse sont aptes à se rompent en traction.

Selon une deuxième variante du deuxième mode de réalisation, l'entretoise comporte :
- un corps annulaire,
- des premiers reliefs répartis angulairement sur ledit corps, s'étendant axialement à partir d'une première face de celui-ci et destinés à l'appui de l'entretoise contre la deuxième demi-bague, et
- des deuxièmes reliefs répartis angulairement sur ledit corps, s'étendant axialement à partir d'une deuxième face de celui-ci et destinés à l'appui de l'entretoise contre la bride de blocage axial, et
lesdits premiers reliefs et lesdits deuxièmes reliefs sont séparés par des zones du corps qui constituent des zones de faiblesse.

Selon cette deuxième variante du deuxième mode de réalisation, lesdites zones de faiblesse sont aptes à se rompent en flexion/cisaillement.

De manière commune au premier mode de réalisation et au deuxième mode de réalisation, l'agencement de palier selon l'invention comporte une pièce de retenue fixée à l'arbre tournant et apte à retenir la deuxième demi-bague.

Ladite pièce de retenue est une pièce de révolution comportant quatre segments successifs, dans lesquels :
- le premier segment est une collerette de fixation de la pièce de maintient sur l'arbre tournant,
- le deuxième segment est un corps conique,
- le troisième segment est un anneau de support s'étendant circonférentiellement et destiné à supporter radialement la deuxième demi-bague après son déplacement axial, et
- le quatrième segment est une bride de blocage axial s'étendant radialement et destiné à bloquer axialement la deuxième demi-bague après le déplacement axial de celle-ci.

De manière optionnelle, l'agencement de palier selon l'invention comporte un dispositif de butée en rotation pour empêcher une rotation relative de ladite deuxième demi-bague par rapport audit anneau de support après séparation. Selon une forme particulière de réalisation, ledit dispositif de butée en rotation comporte un évidement dudit anneau de support et une saillie.

De manière optionnelle, l'agencement de palier selon l'invention comporte au moins un organe élastique de renvoi de la deuxième demi-bague vers la première demi-bague.

Selon un deuxième aspect, l'invention se rapporte à un turboréacteur comportant au moins un agencement de palier selon le premier aspect.

Un avantage de l'invention réside dans le fait que la solution de l'invention est quasiment indépendante de la charge radiale appliquée, car, contrairement à la solution de l'art antérieur, la charge radiale ne passe pas par un élément rotulant mais par le roulement.

Un autre avantage de l'invention réside dans le fait que la séparation des deux demi-bagues constitue un découplage angulaire qui autorise un désalignement important au niveau du palier, et limite les efforts transmis au support de deuxième palier, et par suite aux structures fixes environnantes.

L'invention sera mieux comprise à la lecture de la description détaillée qui va suivre, de modes de réalisation particuliers de l'invention, fournis à titre indicatif et nullement limitatif, et illustrés au moyen des dessins annexés, dans lesquels :
- la figure 1 illustre, en coupe axiale et de manière simplifiée, l'environnement général de l'invention dans un turboréacteur ;
- la figure 2 illustre, en coupe axiale et à plus grande échelle, une portion de turboréacteur montrant le premier mode de réalisation de l'invention dans son environnement immédiat ;
- la figure 3 représente, en coupe axiale, un agencement de palier selon le premier mode de réalisation de l'invention ;
- la figure 4 est une vue à plus grande échelle, montrant le dispositif de butée en rotation de l'agencement de palier selon l'invention ;
- la figure 5 représente, en coupe axiale, un agencement de palier selon le deuxième mode de réalisation de l'invention ;
- la figure 6 est une vue en perspective à plus grande échelle d'une entretoise selon une première variante du deuxième mode de réalisation ; et
- la figure 7 est une vue perspective à plus grande échelle d'une entretoise selon une deuxième variante du deuxième mode de réalisation.

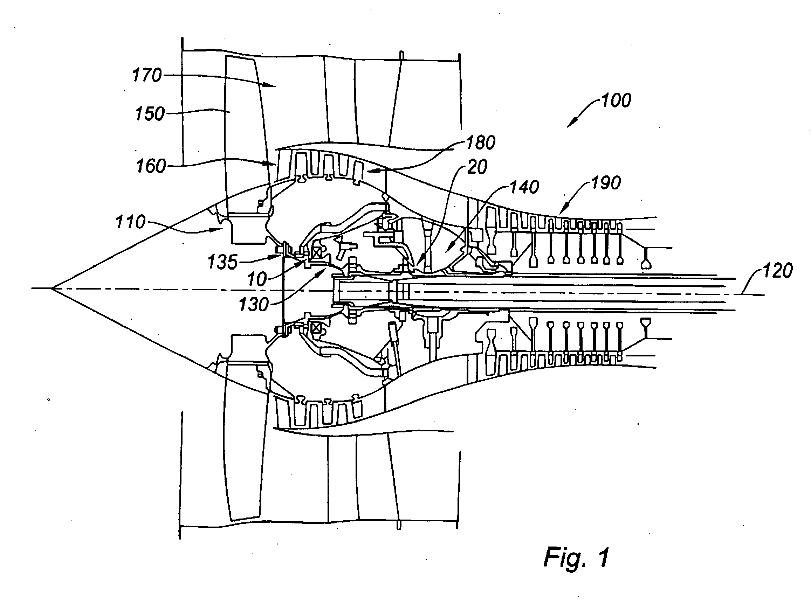

En se référant tout d'abord à la figure 1, il est représenté un turboréacteur 100, comportant une soufflante 110 d'axe 120 entraînée et supportée par un arbre tournant 130 d'une ligne d'arbre à basse pression 140. La soufflante 110 est munie d'aubes 150 qui s'étendent devant l'entrée d'une veine interne 160 ou veine principale d'écoulement de l'air, et devant l'entrée d'une veine externe 170, entourant la veine interne 160, et dans laquelle circule l'air assurant la poussée du turboréacteur. Un compresseur à basse pression 180 et un compresseur à haute pression 190 sont situés dans la veine interne 160. L'arbre tournant 130 porte la soufflante 110 à son extrémité avant 135, et s'étend en aval à partir de la soufflante 110. L'arbre tournant 130 est soutenu par un premier palier 10 en aval de la soufflante 110 et par un deuxième palier 20 en aval du premier palier 10.

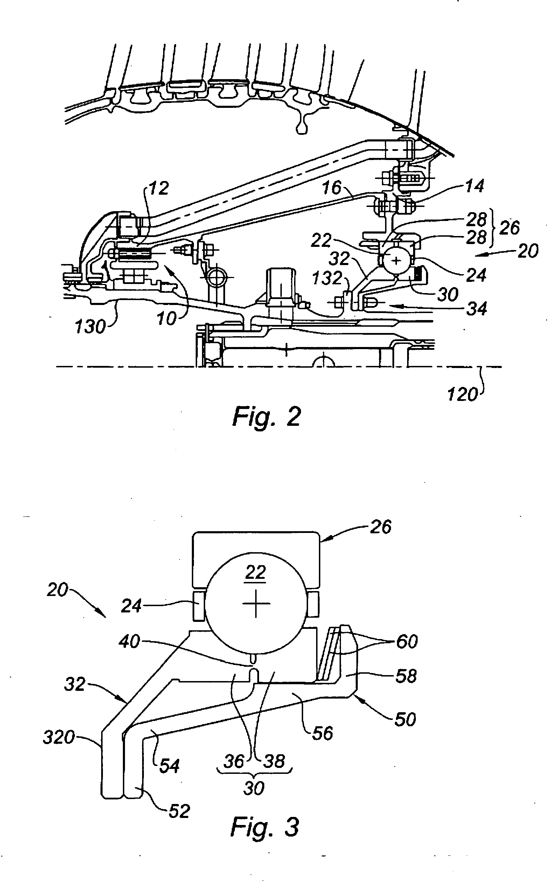

En se référant à la figure 2, il est représenté, à plus grande échelle, l'arbre tournant 130 d'axe 120, soutenu par le premier palier 10 et par le deuxième palier 20.

Le premier palier 10 est un palier à rouleaux, dont la bague de roulement extérieure 12 est reliée à une pièce de structure fixe 14 du turboréacteur par une bride fusible 16 apte à se rompre lorsqu'elle est soumise à une charge dépassant une valeur de charge prédéterminée.

Le deuxième palier 20 est un palier de butée, remplissant une fonction de butée axiale pour l'arbre tournant 130. Il comporte des éléments roulants 22 retenus au moyen d'une cage de roulement 24 et disposés entre une bague de roulement extérieure 26 et une bague de roulement intérieure 30.

La bague de roulement extérieure 26 est fixée sur la pièce de structure fixe 14. Elle est constituée de deux demi bagues 28. En variante équivalente, la bague de roulement extérieure 26 pourrait être constituée d'un seul tenant. La bague de roulement intérieure 30 est dotée d'une extension de bague 32 qui est fixée à une collerette de fixation 132 de l'arbre tournant 130. Sur l'exemple illustré, cette fixation est réalisée au moyen d'une liaison boulonnée 34.

L'agencement de deuxième palier selon l'invention est illustré plus amplement aux figures 3 à 4 et 5 à 7, qui en décrivent respectivement un premier mode de réalisation et un deuxième mode de réalisation.

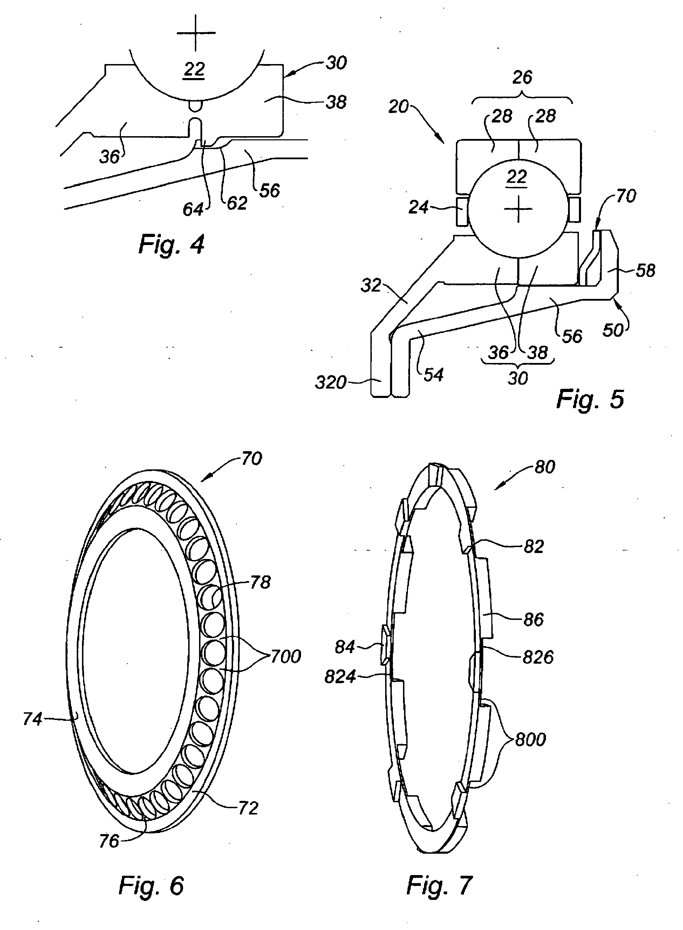

Un premier mode de réalisation du deuxième palier 20 est illustré aux figures 3 et 4. Sur la figure 3, le deuxième palier 20 est représenté isolément de son environnement et à plus grande échelle que sur la figure 2. La figure 3 montre, en coupe axiale, les éléments roulants 22, la cage de roulement 24, la bague de roulement extérieure 26, formée d'un seul tenant, la bague de roulement intérieure 30 et son extension de bague 32.

Selon ce premier mode de réalisation, la bague de roulement intérieure 30 comporte une première demi-bague 36 et une deuxième demi-bague 38 qui sont reliées entre elles par une couronne de liaison 40. Cette couronne de liaison 40 peut être continue. Elle peut, en variante, être discontinue pour permettre la lubrification du palier. Du fait de cette liaison rigide entre les deux demi-bagues 36, 38, la bague de roulement intérieure 30 est réalisée d'un seul tenant. La largeur de la couronne de liaison 40 définit deux gorges respectivement situées sur une face intérieure et sur une face extérieure de la bague de roulement intérieure 30. La couronne de liaison 40 constitue une zone de faiblesse pour la bague de roulement intérieure 30.

La première demi-bague 36 est prolongée radialement vers l'intérieur par une extension 32 se terminant par une collerette de fixation 320 pour sa fixation à la collerette de fixation 132 de l'arbre tournant 130 au moyen de la liaison boulonnée 34 déjà décrite (voir figure 2).

L'agencement de palier 20 comporte également une pièce de retenue 50 se présentant sous la forme d'une pièce de révolution comportant quatre segments successifs. Le premier segment est une collerette de fixation 52 pour la fixation de ladite pièce de retenue 50 sur l'arbre tournant 130. Sur l'exemple illustré, cette fixation est réalisée sur la collerette de fixation 132 de l'arbre tournant 130, au moyen de la liaison boulonnée 34, déjà décrite. Le deuxième segment est un corps conique 54 qui assure la transition entre le premier segment et le troisième segment. Le troisième segment est un anneau de support 56 destiné à supporter la deuxième demi-bague 38 après découplage du palier, un jeu étant aménagé en fonctionnement normal. Le quatrième segment est une bride de blocage axial 58 qui s'étend radialement vers l'extérieur à partir de l'anneau de support 56, et dont le rôle va être décrit ci-après.

De manière optionnelle, l'agencement de palier 20 comporte également un organe élastique 60, dont le rôle va être décrit ci-après.

Le fonctionnement de l'agencement de palier 20 selon l'invention est le suivant. En fonctionnement normal, les deux demi-bagues 36, 38 sont accolées l'une à l'autre et constituent la bague de roulement intérieure 30 sur laquelle roulent les éléments roulants 22. Il peut se produire un événement exceptionnel, par exemple la rupture d'une aube 150 de la soufflante 110, qui provoque un balourd et une perturbation de la rotation de l'arbre tournant 130. Dans un tel cas, il est prévu un découplage au niveau du premier palier 10. Ce découplage a pour effet une perturbation de la rotation de l'arbre tournant 130 qui se met à fléchir. Le deuxième palier 20 fonctionne alors en subissant une charge radiale importante, qui provoque un désalignement au niveau de ce deuxième palier 20.

Lorsque le désalignement ou le moment imposé au deuxième palier 20 devient supérieur à une valeur prédéterminée, la couronne de liaison 40 cède par traction, et les deux demi-bagues 36, 38 se retrouvent séparées l'une de l'autre. La première demi-bague 36, qui est fixée à l'arbre tournant 130, n'est pas affectée par cette séparation. En revanche, la deuxième demi-bague 38 se trouve libre de se déplacer axialement, et s'écarte de la première demi-bague 36 en restant supportée par l'anneau de support 56, avec un jeu radial. Ce déplacement axial est limité. En effet, la bride de blocage axial 58 constitue une butée axiale pour la deuxième demi-bague 38. L'organe élastique 60 interposé sert à amortir l'arrivée de la deuxième demi-bague 38 contre la bride de blocage axial 58, et même à ramener la deuxième demi-bague 38 vers la première demi-bague 36 lorsque les charges appliquées ont été réduites, ce qui permet d'assurer la phase d'autorotation, c'est-à-dire la phase de retour au sol de l'aéronef. Dans l'exemple illustré, l'organe élastique consiste en deux rondelles élastiques 60.

Dans l'exemple de réalisation illustré aux figures, il est prévu que, après séparation, la deuxième demi-bague 38 ne soit pas libre de se déplacer en rotation par rapport à l'anneau de support 56. En effet, l'agencement de palier 20 est doté d'un dispositif de butée en rotation 62, 64, qui est illustré sur la figure 4. Ce dispositif de butée en rotation comporte un évidement 62 de la face radialement extérieure de l'anneau de support 56, et une saillie 64, qui s'étend vers l'intérieur à partir de la face radialement extérieure de la deuxième demi-bague 38. L'évidement 62 est dimensionné de manière à autoriser le déplacement axial de la deuxième demi-bague 38 après séparation des deux demi-bagues 36, 38.

La séparation des deux demi-bagues 36, 38 constitue un découplage angulaire au niveau du deuxième palier 20. Après séparation des deux demi-bagues 36, 38, le jeu axial entre celles-ci est augmenté. Cela a pour effet d'augmenter le jeu radial dans le deuxième palier 20, et donc de compenser le désalignement causé par un fléchissement de l'arbre tournant 130 au cours de sa rotation. Cette augmentation du jeu radial permet de limiter le couple transmis aux structures fixes environnantes, et donc de protéger celles-ci lors d'un événement exceptionnel tel qu'une rupture d'aube, au moins pendant la phase d'autorotation.

Un deuxième mode de réalisation du deuxième palier 20 est illustré aux figures 5 à 7. Il va être décrit uniquement en ce qui concerne ses différences avec le premier mode de réalisation décrit ci-dessus. La bague de roulement intérieure 30 n'est pas réalisée d'un seul tenant mais comporte deux demi-bagues 36, 38 qui sont distinctes. En fonctionnement normal, ces deux demi-bagues 36, 38 sont accolées et maintenues l'une contre l'autre au moyen d'une entretoise 70, 80 disposée entre la deuxième demi-bague 38 et la bride de blocage axial 58. Cette entretoise 70, 80 est apte à se déformer lorsque le palier 20 est soumis à un désalignement ou un moment supérieur à une valeur prédéterminée. La déformation de l'entretoise 70, 80 a pour effet de réduire sa dimension axiale et d'écarter la deuxième demi-bague 38 de la première demi-bague 36. La deuxième demi-bague 38 se déplaçant alors axialement vers la bride de blocage axial 58. Selon la première et la deuxième variante du deuxième mode de réalisation, l'entretoise 70, 80 se présente sous la forme d'une rondelle.

Selon une première variante du deuxième mode de réalisation du deuxième palier 20 illustrée aux figures 5 et 6, l'entretoise 70 se présente sous la forme d'une rondelle qui comporte un premier rebord 72 et un deuxième rebord 74 s'étendant radialement de part et d'autre d'un corps intermédiaire 76 annulaire sensiblement plat et oblique. Le premier rebord 72 s'étend radialement vers l'intérieur à partir du corps intermédiaire 76. En service, il est destiné à l'appui de l'entretoise 70 contre la deuxième demi-bague 38. Le deuxième rebord 74 s'étend radialement vers l'extérieur à partir du corps 76. En service, il est destiné à l'appui de l'entretoise 70 contre la bride de blocage axial 58. Le corps intermédiaire 76 est percé de trous 78 qui sont séparés par des zones constituant des zones de faiblesse 700. Lorsque le deuxième palier 20 est soumis à un désalignement ou un moment supérieur à une valeur prédéterminée, lesdites zones de faiblesse 700 se rompent en traction. Le corps 76 est écrasé et les deux rebords 72, 74 se retrouvent sensiblement dans un même plan. La dimension axiale de l'entretoise 70 est alors réduite. Il s'ensuit que la deuxième demi-bague 38 se déplace axialement en direction de la bride de blocage axial 58.

Une deuxième variante du deuxième mode de réalisation du deuxième palier 20 est illustrée à la figure 7, qui montre une entretoise 80 alternative à l'entretoise 70 de la première variante de ce même mode de réalisation. En d'autres termes, les deux entretoises 70, 80 sont fonctionnellement équivalente, et l'entretoise 80 de la deuxième variante peut être subsituée à l'entretoise 70 de la première variante. C'est pourquoi il n'est pas présenté de figure analogue à la figure 5 pour cette deuxième variante.

Selon la deuxième variante du deuxième mode de réalisation, l'entretoise 80 se présente sous la forme d'une rondelle qui comporte un corps annulaire sensiblement plat 82 à partir duquel s'étendent des premiers reliefs 84 et des deuxièmes reliefs 86 répartis angulairement sur ledit corps intermédiaire 82, de part et d'autre de celui-ci. Lesdits premiers reliefs 84 s'étendent axialement à partir d'une première face 824 du corps intermédiaire 82 et sont destinés à l'appui de l'entretoise 80 contre ladite deuxième demi-bague 38. Lesdits deuxièmes reliefs 86 s'étendent axialement à partir d'une deuxième face 826 du corps intermédiaire 82 et sont destinés à l'appui de l'entretoise 80 contre la bride de blocage axial 58. Les premiers reliefs 84 et les deuxièmes reliefs 86 sont séparés par des zones de moindre épaisseur qui constituent des zones de faiblesse 800. Lorsque le deuxième palier 20 est soumis à un désalignement ou un moment supérieur à une valeur prédéterminée, lesdites zones de faiblesse 800 se rompent en flexion/cisaillement. La dimension axiale de l'entretoise 80 est alors réduite. Les premiers reliefs 84 et les deuxièmes reliefs 86 se retrouvent alors sensiblement dans un même plan. Il s'ensuit que la deuxième demi-bague 38 se déplace axialement en direction de la bride de blocage axial 58.

Sur la figure 5 correspondant au deuxième mode de réalisation de l'invention, la bague de roulement extérieure 26 est constituée de deux demi-bagues 28, alors que sur la figure 2 correspondant au premier mode de réalisation la bague de roulement extérieure est constituée d'un seul tenant. Ces deux alternatives sont équivalentes et n'ont pas d'incidence sur la présente invention.

De plus, bien que cela n'apparaisse pas explicitement sur la figure 5, le deuxième mode de réalisation de l'agencement de deuxième palier peut comporter des organes élastiques 60 de manière analogue au premier mode de réalisation.

Enfin, bien que cela n'apparaisse pas explicitement sur la figure 5, le deuxième mode de réalisation de l'agencement de deuxième palier peut comporter un dispositif de blocage en rotation 62, 64, de manière analogue au premier mode de réalisation.

L'invention n'est pas limitée aux modes et variantes de réalisation qui viennent d'être décrits, mais s'étend aux modes définis par la portée des revendications en annexe.

## Revendications

1. Agencement de palier (20) d'un arbre (130) tournant autour d'un axe (120), du type comportant des éléments roulants (22) disposés entre une bague de roulement extérieure (26) et une bague de roulement intérieure (30), **caractérisé en ce que** ladite bague de roulement intérieure (30) comporte une première demi-bague (36) fixée à l'arbre tournant (130) et une deuxième demi-bague (38), et **en ce que** l'agencement de palier (20) comporte des moyens de maintien (40, 70, 80) pour maintenir ensemble lesdites deux demi-bagues (36, 38), lesdits moyens de maintien (40, 70, 80) étant aptes à se rompre ou se déformer lorsque le palier (20) est soumis à un désalignement ou un moment supérieur à une valeur prédéterminée, de manière à autoriser un déplacement axial de la deuxième demi-bague (38) par rapport à la première demi-bague (36).

2. Agencement de palier (20) selon la revendication 1, **caractérisé en ce que** lesdits moyens de maintien (40, 70, 80) comportent une couronne de liaison (40) interposée entre les deux demi-bagues (36, 38) et les reliant entre elles de sorte qu'avant séparation la bague de roulement intérieure (30) est d'un seul tenant, et **en ce que** ladite couronne de liaison (40) est apte à se rompre par traction lorsque le palier (20) est soumis à un désalignement ou un moment supérieur à une valeur prédéterminée.

3. Agencement de palier (20) selon la revendication 2, **caractérisé en ce que** ladite couronne de liaison (40) est continue.

4. Agencement de palier (20) selon la revendication 2 **caractérisé en ce que** ladite couronne de liaison (40) est discontinue.

5. Agencement de palier (20) selon la revendication 1, **caractérisé en ce que** lesdites deux demi-bagues (36, 38) sont distinctes l'une de l'autre, **en ce que** lesdits moyens de maintien (40, 70, 80) comportent une entretoise (70, 80) interposée entre la deuxième demi-bague (38) et une bride de blocage axial (58), ladite bride de blocage axial (58) étant fixé à l'arbre tournant (130).

6. Agencement de palier (20) selon la revendication 5, **caractérisé en ce que** ladite entretoise (70, 80) se présente sous la forme d'une rondelle ayant des zones de faiblesse (700, 800) aptes à se rompre lorsque le palier (20) est soumis à un désalignement ou un moment supérieur à une valeur prédéterminée.

7. Agencement de palier selon la revendication 6, **caractérisé en ce que** ladite entretoise (70) comporte :
- un corps (76) annulaire et sensiblement oblique,
- un premier rebord (72) s'étendant radialement vers l'intérieur à partir dudit corps (76) et destiné à l'appui de ladite entretoise (70) contre ladite deuxième demi-bague (38), et
- un deuxième rebord (74) s'étendant radialement vers l'extérieur à partir dudit corps (76) et destiné à l'appui de ladite entretoise (70) contre ladite bride de blocage axial (58),
et **en ce que** ledit corps (76) est percé de trous (78) séparés par des zones de faiblesse (700).

8. Agencement de palier selon la revendication 6 ou 7, **caractérisé en ce que** lesdites zones de faiblesse (700) sont aptes à se rompent en traction.

9. Agencement de palier selon la revendication 6, **caractérisé en ce que** ladite entretoise (80) comporte :
- un corps (82) annulaire,
- des premiers reliefs (84) répartis angulairement sur ledit corps (82), s'étendant axialement à partir d'une première face (824) de celui-ci et destinés à l'appui de ladite entretoise (80) contre ladite deuxième demi-bague (38), et
- des deuxièmes reliefs (86) répartis angulairement sur ledit corps (82), s'étendant axialement à partir d'une deuxième face (826) de celui-ci et destinés à l'appui de ladite entretoise (80) contre ladite bride de blocage axial (58),
et **en ce que** lesdits premiers reliefs (84) et lesdits deuxièmes reliefs (86) sont séparés par des zones du corps (76) qui constituent des zones de faiblesse (800).

10. Agencement de palier selon la revendication 6 ou 9, **caractérisé en ce que** lesdites zones de faiblesse (800) sont aptes à se rompent en flexion/cisaillement.

11. Agencement de palier (20) selon l'une quelconque des revendications 1 à 10, **caractérisé en ce qu'**il comporte une pièce de retenue (50) fixée à l'arbre tournant (130) et apte à retenir la deuxième demi-bague (38).

12. Agencement de palier (20) selon la revendication 11, **caractérisé en ce que** ladite pièce de retenue (50) est une pièce de révolution comportant quatre segments successifs (52, 54, 56, 58), dans lesquels :
- le premier segment est une collerette de fixation (52) de la pièce de maintien (50) sur l'arbre tournant (130),
- le deuxième segment est un corps conique (54),
- le troisième segment est un anneau de support (56) s'étendant circonférentiellement et destiné à supporter radialement la deuxième demi-bague (38) après son déplacement axial, et
- le quatrième segment est une bride de blocage axial (58) s'étendant radialement et destiné à bloquer axialement la deuxième demi-bague (38) après le déplacement axial de celle-ci.

13. Agencement de palier (20) selon la revendication 12, **caractérisé en ce qu'**il comporte, en outre, un dispositif de butée en rotation (62, 64) pour empêcher une rotation relative de ladite deuxième demi-bague (38) par rapport audit anneau de support (56) après séparation.

14. Agencement de palier (20) selon la revendication 13, **caractérisé en ce que** ledit dispositif de butée en rotation (62, 64) comporte un évidement (62) dudit anneau de support (56) et une saillie (64) de la deuxième demi-bague (38).

15. Agencement de palier (20) selon l'une quelconque des revendications 1 à 14, **caractérisé en ce qu'**il comporte, en outre, au moins un organe élastique (60) de renvoi de la deuxième demi-bague (38) vers la première demi-bague (36).

16. Turboréacteur (100), **caractérisé en ce qu'**il comporte au moins un agencement de palier (20) selon l'une quelconque des revendications 1 à 15.

## Claims

1. A bearing arrangement (20) for a shaft (130) rotating about an axis (120), of the type comprising rolling elements (22) arranged between an outer bearing race (26) and an inner bearing race (30), **characterized by** the fact that said inner bearing race (30) comprises a first half-race (36) fastened to the rotating shaft (130) and a second half-race (38), and that the bearing arrangement (20) comprises maintaining means (40, 70, 80) for maintaining together said two half-races (36, 38), said maintaining means (40, 70, 80) being designed to break or deform when the bearing (20) is subjected to a misalignment or a moment above a predetermined value, so as to allow an axial displacement of the second half-race (38) with respect to the first half-race (36).

2. The bearing arrangement (20) as claimed in claim 1, **characterized by** the fact that said maintaining means (40, 70, 80) comprise a connecting annulus (40) interposed between the two half-races (36, 38) and interconnecting them such that, before separation, the inner bearing race (30) is a single unit, and wherein said connecting annulus (40) is designed to break under tension when the bearing (20) is subjected to a misalignment or a moment above a predetermined value.

3. The bearing arrangement (20) as claimed in claim 2, **characterized by** the fact that said connecting annulus is continuous.

4. The bearing arrangement (20) as claimed in claim 2, **characterized by** the fact that said connecting annulus (40) is discontinuous.

5. The bearing arrangement (20) as claimed in claim 1, **characterized by** the fact that said two half-races (36, 38) are distinct from one another, and that said maintaining means (40, 70, 80) comprise a spacer (70, 80) interposed between the second half-race (38) and an axial blocking flange (58), said axial blocking flange (58) being fastened to the rotating shaft (130).

6. The bearing arrangement (20) as claimed in claim 5, **characterized by** the fact that said spacer (70, 80) takes the form of a washer having weakness zones (700, 800) designed to break when the bearing (20) is subjected to a misalignment or a moment above a predetermined value.

7. The bearing arrangement as claimed in claim 6, **characterized by** the fact that said spacer (70) comprises:
- a substantially oblique annular body (76),
- a first rim (72) extending radially inward from said body (76) and intended to support said spacer (70) against said second half-race (38), and
- a second rim (74) extending radially outward from said body (76) and intended to support said spacer (70) against said axial blocking flange (58),
and that said body (76) is pierced with holes (78) separated by weakness zones (700).

8. The bearing arrangement as claimed in claim 6 or 7, **characterized by** the fact that said weakness zones (700) are designed to break in tension.

9. The bearing arrangement as claimed in claim 6, **characterized by** the fact that said spacer (80) comprises:
- an annular body (82),
- first protrusions (84) distributed angularly over said body (82), extending axially from a first face (824) thereof and intended to support said spacer (80) against said second half-race (38), and
- second protrusions (86) distributed angularly over said body (82), extending axially from a second face (826) thereof and intended to support said spacer (80) against said axial blocking flange (58),
and that said first protrusions (84) and said second protrusions (86) are separated by zones of the body (76) which constitute weakness zones (800).

10. The bearing arrangement as claimed in claim 6 or 9, **characterized by** the fact that said weakness zones (800) are designed to break in bending/shear.

11. The bearing arrangement (20) as claimed in any one of claims 1 to 10, which comprises a retention piece (50) fastened to the rotating shaft (130) and designed to retain the second half-race (38).

12. The bearing arrangement (20) as claimed in claim 11, **characterized by** the fact that said retention piece (50) is a piece of revolution comprising four successive segments (52, 54, 56, 58), in which:
- the first segment is a collar for fastening (52) the maintaining piece (50) to the rotating shaft (130),
- the second segment is a conical body (54),
- the third segment is a support ring (56) extending circumferentially and intended to support the second half-race radially (38) after its axial displacement, and
- the fourth segment is an axial blocking flange (58) extending radially and intended to block the second half-race axially (38) after the axial displacement thereof.

13. The bearing arrangement (20) as claimed in claim 12, which additionally comprises a rotation stop device (62, 64) for preventing a relative rotation of said second half-race (38) with respect to said support ring (56) after separation.

14. The bearing arrangement (20) as claimed in claim 13, **characterized by** the fact that said rotation stop device (62, 64) comprises a recess (62) in said support ring (56) and a projection (64) on the second half-race (38).

15. The bearing arrangement (20) as claimed in any one of claims 1 to 14, **characterized by** the fact that it additionally comprises at least one elastic member (60) for returning the second half-race (38) toward the first half-race (36).

16. A turbine engine (100) which comprises at least one bearing arrangement (20) as claimed in any one of claims 1 to 15.

## Patentansprüche

1. Lageranordnung (20) einer Welle (130), die sich um eine Achse (120) dreht, von einer Bauart, die rollfähige Elemente (22) aufweist, welche zwischen einem äußeren Lagerring (26) und einem inneren Lagerring (30) angeordnet sind, **dadurch gekennzeichnet, dass** der innere Lagerring (30) einen ersten Halbring (36), der an der Drehwelle (130) befestigt ist, und einen zweiten Halbring (38) aufweist, und dass die Lageranordnung (20) Haltemittel (40, 70, 80) aufweist, um die beiden Halbringe (36, 38) zusammenzuhalten, wobei die Haltemittel (40, 70, 80) aufbrechen oder sich verformen können, wenn das Lager (20) einen Versatz oder ein Moment, das einen zuvor festgelegten Wert überschreitet, erfährt, um eine axiale Verschiebung des zweiten Halbrings (38) gegenüber dem ersten Halbring (36) zu gestatten.

2. Lageranordnung (20) nach Anspruch 1, **dadurch gekennzeichnet, dass** die Haltemittel (40, 70, 80) einen Verbindungskranz (40) aufweisen, der zwischen den beiden Halbringen (36, 38) angeordnet ist und sie derart miteinander verbindet, dass der innere Rollring (30) vor dem Trennungsvorgang durchgehend ist, und **dadurch**, dass der Verbindungskranz (40) durch Zugkräfte aufbrechen kann, wenn das Lager (20) einen Versatz oder ein Moment, das einen zuvor festgelegten Wert überschreitet, erfährt.

3. Lageranordnung (20) nach Anspruch 2, **dadurch gekennzeichnet, dass** der Verbindungskranz (40) durchgehend ist.

4. Lageranordnung (20) nach Anspruch 2, **dadurch gekennzeichnet, dass** der Verbindungskranz (40) unterbrochen ist.

5. Lageranordnung (20) nach Anspruch 1, **dadurch gekennzeichnet, dass** die beiden Halbringe (36, 38) sich voneinander unterscheiden, indem die Haltemittel (40, 70, 80) ein Abstandselement (70, 80) aufweisen, das zwischen dem zweiten Halbring (38) und einer axialen Sperrschelle (58) angeordnet ist, wobei die axiale Sperrschelle (58) an der Drehwelle (130) befestigt ist.

6. Lageranordnung (20) nach Anspruch 5, **dadurch gekennzeichnet, dass** das Abstandselement (70, 80) in Form einer Rundscheibe vorliegt, die Sollbruchstellen (700, 800) aufweist, welche zur Wirkung kommen können, wenn das Lager (20) einen Versatz oder ein Moment, das einen zuvor festgelegten Wert überschreitet, erfährt.

7. Lageranordnung nach Anspruch 6, **dadurch gekennzeichnet, dass** das Abstandselement (70) Folgendes aufweist:
- einen ringförmigen und im Wesentlichen schrägen Körper (76),
- eine erste Kante (72), die sich vom Körper (76) radial nach innen erstreckt und dazu bestimmt ist, das Abstandselement (70) gegen den zweiten Halbring (38) zu drücken, und
- eine zweite Kante (74), die sich vom Körper (76) radial nach außen erstreckt und dazu bestimmt ist, das Abstandselement (70) gegen die axiale Sperrschelle (58) zu drücken,
und **dadurch**, dass der Körper (76) von Löchern (78) durchbohrt ist, deren Zwischenbereiche Sollbruchstellen (700) darstellen.

8. Lageranordnung nach Anspruch 6 oder 7, **dadurch gekennzeichnet, dass** die Sollbruchstellen (700) durch Zugkräfte aufbrechen können.

9. Lageranordnung nach Anspruch 6, **dadurch gekennzeichnet, dass** das Abstandselement (80) Folgendes aufweist:
- einen ringförmigen Körper (82),
- erste erhabene Elemente (84), die im Winkelsinne auf dem Körper (82) verteilt sind, wobei sie sich axial von einer ersten Seite (824) desselben erstrecken und dazu bestimmt sind, das Abstandselement (80) gegen den zweiten Halbring (38) zu drücken, und
- zweite erhabene Elemente (86), die im Winkelsinne auf dem Körper (82) verteilt sind, wobei sie sich axial von einer zweiten Seite (826) desselben erstrecken und dazu bestimmt sind, das Abstandselement (80) gegen die axiale Sperrschelle (58) zu drücken,
und **dadurch**, dass die ersten erhabenen Elemente (84) und die zweiten erhabenen Elemente (86) durch Bereiche des Körpers (76) getrennt sind, die Sollbruchstellen (800) darstellen.

10. Lageranordnung nach Anspruch 6 oder 9, **dadurch gekennzeichnet, dass** die Sollbruchstellen (800) durch Biege-/Scherkräfte aufbrechen können.

11. Lageranordnung (20) nach einem der Ansprüche 1 bis 10, **dadurch gekennzeichnet, dass** sie ein Rückhalteteil (50) aufweist, das an der Drehwelle (130) befestigt ist und den zweiten Halbring (38) zurückhalten kann.

12. Lageranordnung (20) nach Anspruch 11, **dadurch gekennzeichnet, dass** das Rückhalteteil (50) ein rotationssymmetrisches Teil ist, das vier aufeinanderfolgende Abschnitte (52, 54, 56, 58) aufweist, wobei:
- der erste Abschnitt ein Flansch (52) zur Befestigung des Halteteils (50) an der Drehwelle (130) ist,
- der zweite Abschnitt ein kegelförmiger Körper (54) ist,
- der dritte Abschnitt ein Stützring (56) ist, der sich entlang des Umfangs erstreckt und dazu bestimmt ist, den zweiten Halbring (38) nach dessen axialer Verschiebung zu unterstützen, und
- der vierte Abschnitt eine axiale Sperrschelle (58) ist, die sich radial erstreckt und dazu bestimmt ist, den zweiten Halbring (38) nach dessen axialer Verschiebung zu blockieren.

13. Lageranordnung (20) nach Anspruch 12, **dadurch gekennzeichnet, dass** sie, darüber hinaus, eine Drehanschlagsvorrichtung (62, 64) aufweist, um nach der Trennung eine relative Drehung des zweiten Halbrings (38) gegenüber dem Stützring (56) zu verhindern.

14. Lageranordnung (20) nach Anspruch 13, **dadurch gekennzeichnet, dass** die Drehanschlagsvorrichtung (62, 64) eine Aussparung (62) im Stützring (56) und einen Vorsprung (64) im zweiten Halbring (38) aufweist.

15. Lageranordnung (20) nach einem der Ansprüche 1 bis 14, **dadurch gekennzeichnet, dass** sie, darüber hinaus, mindestens ein elastisches Organ (60) aufweist, das den zweiten Halbring (38) in Richtung des ersten Halbrings (36) zurückbefördert.

16. Strahlturbine (100), **dadurch gekennzeichnet, dass** sie mindestens eine Lageranordnung (20) nach einem der Ansprüche 1 bis 15 aufweist.
